# EUROPEAN PATENT SPECIFICATION

(11) **EP 4 253 089 B1**
(45) Date of publication and mention of the grant of the patent: **07.05.2025**
(21) Application number: 23162147.5
(22) Date of filing: 15.03.2023
(51) Int. Cl.: B60C 11/00, B60C 11/03, B60C 9/00

(54) **MOTORCYCLE TIRE PAIR**
MOTORRADREIFENPAAR
PAIRE DE PNEUS DE MOTOCYCLETTE

(30) Priority: 30.03.2022 JP 2022056603
(43) Date of publication of application: 04.10.2023
(73) Proprietor: Sumitomo Rubber Industries, Ltd., Kobe-shi, Hyogo 651-0072 (JP)
(72) Inventor: KOBORI, Chihiro, Kobe-shi, 651-0072 (JP)
(74) Representative: Manitz Finsterwald Patent- und Rechtsanwaltspartnerschaft mbB

(56) References cited:
- BR-A2- 112020 001 570
- JP-A- 2001 055 010
- JP-A- 2001 138 705
- US-B2- 7 874 330
- US-B2- 8 499 808

## Description

### CROSS-REFERENCE TO RELATED APPLICATIONS

This application claims priority on Japanese Patent Application No. 2022-056603 filed on March 30, 2022.

### TECHNICAL FIELD

The present invention relates to motorcycle tire pairs.

### BACKGROUND ART

A motorcycle corners with its vehicle body leaned. The tread surface of each tire mounted on the motorcycle has a rounded shape. During straight running, a portion at an equator plane of the tread surface mainly comes into contact with a road surface. During cornering, an axially outer portion of the tread surface mainly comes into contact with a road surface.

For motorcycle tires, attempts to specify the radius of curvature of a tread surface depending on an area of the tread surface have been made to improve performance such as cornering performance and lightness (for example, PATENT LITERATURE 1 below).

### CITATION LIST

### [PATENT LITERATURE]

PATENT LITERATURE 1: Japanese Laid-Open Patent Publication No. 2013-216135

A motorcycle tire pair in accordance with the preamble of claim 1 is known from JP 2001 138705 A. Related tires are described in BR 1120 2000 1570 A2, US 7 874 330 B2, JP 2001 055010 A and US 8 499 808 B2.

### SUMMARY OF THE INVENTION

### [TECHNICAL PROBLEM]

In a motorcycle, even when the cornering force of the front tire is increased, for example, if the rear tire does not have a sufficiently high cornering force, the steering characteristics show an oversteering tendency. Even when the front tire has high cornering performance, if the rear tire has higher cornering performance than the front tire, the steering characteristics show an understeering tendency.

For example, even if measures are taken to improve the cornering performance of the front tire, the measures taken for the front tire are not fully utilized in some cases, depending on the rear tire to be combined. To improve the performance of a vehicle, not only the front tire but also for the rear tire are to be tuned.

The present invention has been made in view of such circumstances. An object of the present invention is to provide a motorcycle tire pair that can improve the cornering performance of a vehicle.

### [SOLUTION TO PROBLEM]

A motorcycle tire pair according to one aspect of the present invention includes a front tire and a rear tire. In the tire pair, each of the front tire and the rear tire includes a pair of beads, a carcass extending on and between a first bead and a second bead that are the pair of beads, a band located radially outward of the carcass, and a tread located radially outward of the band. The carcass includes a large number of carcass cords aligned with each other, and each of the carcass cords is inclined relative to an equator plane. The band includes a band cord extending substantially in a circumferential direction. The tread has a tread surface that comes into contact with a road surface. In a meridian cross-section, a contour line of the tread surface has a portion divided in a length ratio of 1:2:1 from an equator to an end of the tread surface, and is thus divided into five parts. The tire equator is defined as the point of intersection of the tread surface and the equator plane and the end of the tread surface is defined as an axially outer end of the tire. The five parts are a center part including the equator, a pair of middle parts connected to the center part, and a pair of shoulder parts connected to the middle parts. An arc that passes through the equator and both ends of the center part is a first arc. An arc that passes through inner and outer ends of the middle part and a center of the middle part is a second arc. An arc that passes through inner and outer ends of the shoulder part and a center of the shoulder part is a third arc. A ratio (R1f/R1r) of a radius R1f of the first arc of the front tire to a radius R1r of the first arc of the rear tire is a center arc index. A ratio (R2f/R2r) of a radius R2f of the second arc of the front tire to a radius R2r of the second arc of the rear tire is a middle arc index. A ratio (R3f/R3r) of a radius R3f of the third arc of the front tire to a radius R3r of the third arc of the rear tire is a shoulder arc index. The middle arc index is greater than or equal to the center arc index. The shoulder arc index is smaller than the center arc index.

Preferably, in the motorcycle tire pair, the middle arc index is not less than 0.50, and the shoulder arc is not less than 0.35.

Preferably, in the motorcycle tire pair, a distance in a radial direction from the equator to an end of the tread surface is a tread height. A ratio of the tread height to an outer diameter in the front tire is not less than 5.0% and not greater than 10.0%, and a ratio of the tread height to an outer diameter in the rear tire is not less than 8.5% and not greater than 15.0%.

Preferably, in the motorcycle tire pair, a ratio of the radius R1f of the first arc to an outer diameter in the front tire is not less than 8.0% and not greater than 13.0%, and a ratio of the radius R1f of the first arc to an outer diameter in the rear tire is not less than 9.0% and not greater than 21.0%.

Preferably, in the motorcycle tire pair, the tread surface has no groove that intersects the equator.

Preferably, in the motorcycle tire pair, an angle of each carcass cord with respect to the equator plane is not less than 20 degrees and not greater than 65 degrees.

More preferably, in the motorcycle tire pair, each carcass cord is a cord formed from an organic fiber.

### [ADVANTAGEOUS EFFECTS OF THE INVENTION]

The present invention provides a motorcycle tire pair that can improve the cornering performance of a vehicle.

### BRIEF DESCRIPTION OF DRAWINGS

FIG. 1 is a cross-sectional view showing a part of a front tire included in a motorcycle tire pair according to an embodiment of the present invention.
FIG. 2 is a schematic diagram illustrating the configuration of a carcass and a band in the front tire.
FIG. 3 is a cross-sectional view illustrating a contour line of a tread surface of the front tire.
FIG. 4 is a development showing a modification of the tread surface.
FIG. 5 is a cross-sectional view showing a part of a rear tire included in the motorcycle tire pair according to the embodiment of the present invention.
FIG. 6 is a schematic diagram illustrating the configuration of a carcass and a band in the rear tire.
FIG. 7 is a cross-sectional view illustrating a contour line of a tread surface of the rear tire.

### DETAILED DESCRIPTION

The following will describe in detail the present invention based on preferred embodiments with appropriate reference to the drawings.

A tire is fitted onto a rim. The interior of the tire is filled with air to adjust the internal pressure of the tire. In the present invention, the tire fitted on the rim is also referred to as tire-rim assembly. The tire-rim assembly includes the rim and the tire fitted on the rim.

In the present invention, a state where a tire is fitted on a normal rim, the internal pressure of the tire is adjusted to a normal internal pressure, and no load is applied to the tire is referred to as normal state.

In the present invention, unless otherwise specified, the dimensions and angles of each component of the tire are measured in the normal state. The dimensions and angles of each component in a meridian cross-section of the tire, which cannot be measured with the tire fitted on the normal rim, are measured in a cross-section of the tire obtained by cutting the tire along a plane including a rotation axis, with the distance between right and left beads being made identical to the distance between the beads in the tire that is fitted on the normal rim.

The normal rim means a rim specified in a standard on which the tire is based. The "standard rim" in the JATMA standard, the "Design Rim" in the TRA standard, and the "Measuring Rim" in the ETRTO standard are normal rims. A rim in the present invention means a normal rim unless otherwise specified.

The normal internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures.

A normal load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are normal loads.

In the present invention, a tread portion of the tire is a portion of the tire that comes into contact with a road surface. A bead portion is a portion of the tire that is fitted to a rim. A side portion is a portion of the tire that extends between the tread portion and the bead portion. The tire includes a tread portion, a pair of bead portions, and a pair of side portions. These portions are portions of the tire.

A motorcycle tire pair according to an embodiment of the present invention includes a front tire that is mounted on the front wheel of a motorcycle (not shown), and a rear tire that is mounted on the rear wheel of the motorcycle. The front tire and the rear tire will be described below.

### [Front Tire]

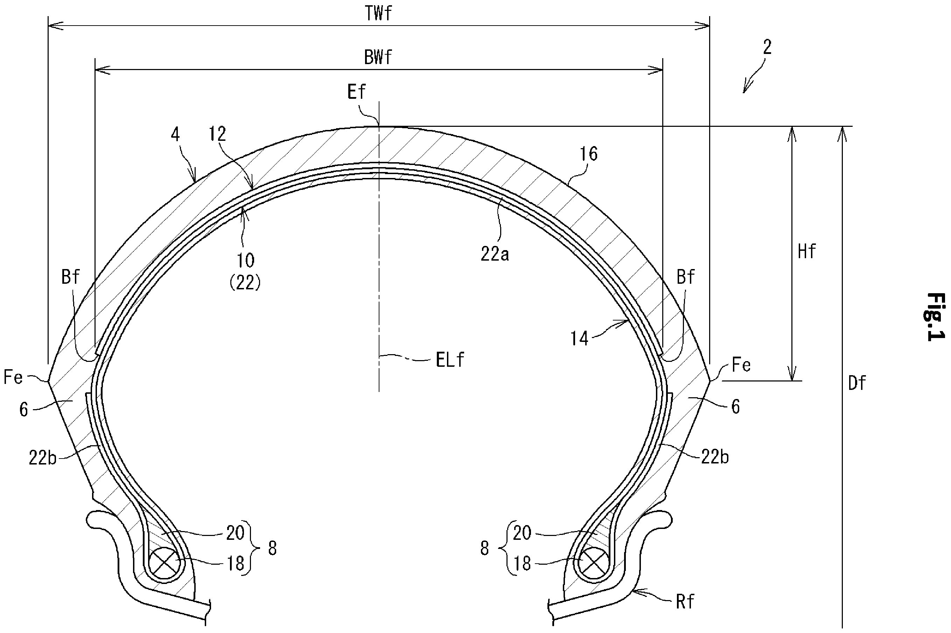

FIG. 1 shows a part of a cross-section (hereinafter, also referred to as meridian cross-section) of a front tire 2 (hereinafter, tire 2) along a plane including the rotation axis of the tire 2. In FIG. 1, the right-left direction is the axial direction of the tire 2, and the up-down direction is the radial direction of the tire 2. The direction perpendicular to the surface of the drawing sheet of FIG. 1 is the circumferential direction of the tire 2. In FIG. 1, an alternate long and short dash line ELf represents the equator plane of the tire 2.

In FIG. 1, the tire 2 is fitted on a rim Rf (normal rim). The interior of the tire 2 is filled with air to adjust the internal pressure of the tire 2.

The tire 2 includes a tread 4, a pair of sidewalls 6, a pair of beads 8, a carcass 10, a band 12, and an inner liner 14.

The tread 4 is formed from a crosslinked rubber. The tread 4 is located radially outward of the band 12. The tread 4 has a tread surface 16 that comes into contact with a road surface. The tire 2 comes into contact with a road surface at the tread surface 16. As shown in FIG. 1, in the meridian cross-section, the tread surface 16 is curved such that a portion thereof at the equator plane ELf projects radially outward.

The tread 4 of the tire 2 has no groove. The tire 2 is a slick tire.

In FIG. 1, a position indicated by reference sign Ef is the point of intersection of the tread surface 16 and the equator plane ELf. The point of intersection Ef corresponds to the equator of the tire 2. If grooves are located on the equator plane ELf, the equator Ef is specified based on a virtual outer surface (tread contour line TLf described later) obtained on the assumption that no groove is formed. The equator Ef is also the radially outer end of the tire 2.

In FIG. 1, each position indicated by reference sign Fe is an end of the tread surface 16. A length indicated by a double-headed arrow TWf is the width of the tread surface 16. The width TWf of the tread surface 16 is represented as the distance in the axial direction from a first end Fe of the tread surface 16 to a second end Fe of the tread surface 16. Each end Fe of the tread surface 16 of the tire 2 is an axially outer end of the tire 2.

Each sidewall 6 is formed from a crosslinked rubber. The sidewall 6 is connected to an end of the tread 4. The sidewall 6 is located radially inward of the tread 4.

Each bead 8 is located radially inward of the sidewall 6. The bead 8 includes a core 18 and an apex 20. The core 18 includes a steel wire, which is not shown. The apex 20 is located radially outward of the core 18. The apex 20 is tapered outward. The apex 20 is formed from a crosslinked rubber having high stiffness.

The carcass 10 is located inward of the tread 4 and the pair of sidewalls 6. The carcass 10 extends on and between a first bead 8 and a second bead 8 that are the pair of beads 8.

The carcass 10 includes at least one carcass ply 22. The carcass 10 of the tire 2 is composed of one carcass ply 22.

The carcass ply 22 includes a ply body 22a that extends on and between a first core 18 and a second core 18, and a pair of turned-up portions 22b that are connected to the ply body 22a and turned up around the respective cores 18 from the inner side toward the outer side in the axial direction.

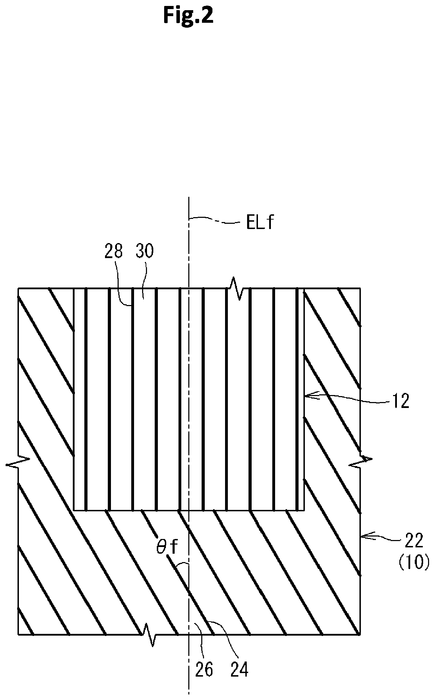

FIG. 2 shows the configuration of the carcass 10 together with the band 12 described later. In FIG. 2, the right-left direction is the axial direction of the tire 2, and the up-down direction is the circumferential direction of the tire 2. The direction perpendicular to the surface of the drawing sheet of FIG. 2 is the radial direction of the tire 2. The front side of the drawing sheet is the outer side in the radial direction, and the back side of the drawing sheet is the inner side in the radial direction.

As shown in FIG. 2, the carcass ply 22 included in the carcass 10 includes a large number of carcass cords 24 aligned with each other. In FIG. 2, each carcass cord 24 is represented by a solid line for convenience of description, but the carcass cords 24 are covered with a topping rubber 26.

Each carcass cord 24 is inclined relative to the equator plane ELf. In FIG. 2, an angle indicated by reference sign θf is the angle (inclination angle θf) of each carcass cord 24 in the carcass ply 22 with respect to the equator plane ELf. In the tire 2, the inclination angle θf of each carcass cord 24 is not less than 20 degrees and not greater than 65 degrees.

In the tire 2, each carcass cord 24 may be a cord formed from an organic fiber (organic fiber cord). Examples of the organic fiber include nylon fibers, rayon fibers, polyester fibers, and aramid fibers. In the tire 2, each carcass cord 24 may be a cord formed from an inorganic fiber. In this case, examples of the inorganic fiber include glass fibers and carbon fibers.

In the tire 2, from the viewpoint of well-balancing strength and steering stability, each carcass cord 24 is preferably an organic fiber cord.

The band 12 is located radially outward of the carcass 10. The band 12 is stacked on the carcass 10 and is located radially inward of the tread 4. The band 12 is located between the tread 4 and the carcass 10.

The band 12 includes a helically wound band cord 28. In FIG. 2, the band cord 28 is represented by a solid line for convenience of description, but is covered with a topping rubber 30. In the tire 2, the band cord 28 extends substantially in the circumferential direction. Specifically, the angle of the band cord 28 with respect to the circumferential direction is not greater than 5°. The band 12 is also referred to as jointless band.

In the tire 2, the band cord 28 may be a cord formed from an organic fiber (organic fiber cord). Examples of the organic fiber include nylon fibers, rayon fibers, polyester fibers, and aramid fibers. In the tire 2, the band cord 28 may be a cord formed from an inorganic fiber. In this case, examples of the inorganic fiber include glass fibers and carbon fibers. The band cord 28 may be a steel cord.

In FIG. 1, each position indicated by reference sign Bf is an end of the band 12. A length indicated by a double-headed arrow BWf is the width of the band 12. The width BWf of the band 12 is represented as the distance in the axial direction from a first end Bf of the band 12 to a second end Bf of the band 12. In the tire 2, the ratio (BWf/TWf) of the width BWf of the band 12 to the width TWf of the tread surface 16 is not less than 0.80 and not greater than 0.95.

The inner liner 14 is located inward of the carcass 10. The inner liner 14 forms an inner surface of the tire 2. The inner liner 14 is formed from a crosslinked rubber having a low gas permeability coefficient. The inner liner 14 maintains the internal pressure of the tire 2.

In FIG. 1, a length indicated by a double-headed arrow Hf is a tread height. The tread height Hf is the distance in the radial direction from the equator Ef to the end Fe of the tread surface 16.

A length indicated by reference sign Df is an outer diameter of the tire 2. The outer diameter Df is measured in the tire 2 in the normal state.

In the tire 2, the ratio (Hf/Df) of the tread height Hf to the outer diameter Df is preferably not less than 5.0% and not greater than 10.0%.

The ratio (Hf/Df) is set to be not less than 5.0%, thus allowing the tire 2 to have a sufficiently high cornering force. From this viewpoint, the ratio (Hf/Df) is more preferably not less than 7.0% and further preferably not less than 8.2%.

The ratio (Hf/Df) is set to be not greater than 10.0%, thus allowing each side portion of the tire 2 to have sufficiently high stiffness. From this viewpoint, the ratio (Hf/Df) is more preferably not greater than 9.0% and further preferably not greater than 8.5%.

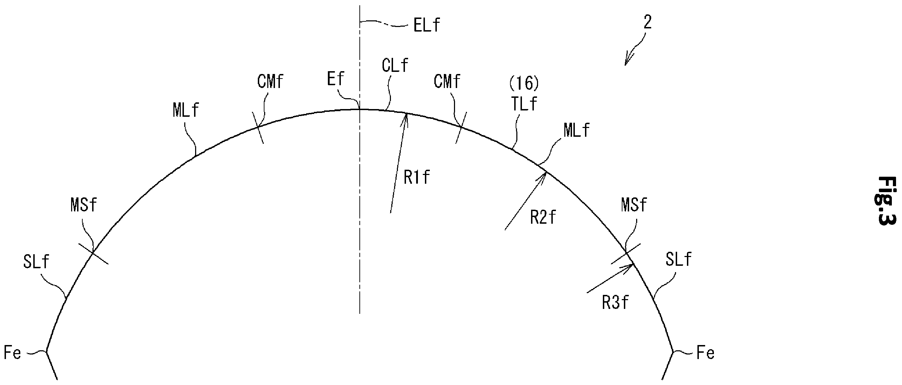

FIG. 3 shows a contour line of the tire 2 in the meridian cross-section. The contour line of the tire 2 is obtained by measuring the outer surface shape of the tire 2 in the normal state using, for example, a displacement sensor.

Of the contour line, a portion from the first end Fe of the tread surface 16 to the second end Fe the tread surface 16 is a contour line TLf of the tread surface 16 (hereinafter, tread contour line TLf). For example, if the tread 4 has a groove, the contour line of a portion where the groove is formed is represented by a virtual contour line obtained on the assumption that the tread 4 has no groove.

A contour line of a tread surface in the rear tire described later is also obtained in the same manner as for the contour line TLf.

In FIG. 3, the tread contour line TLf has a shape that is symmetrical about the equator plane ELf. In the tire 2, the tread contour line TLf has a portion divided in a length ratio of 1:2:1 from the equator Ef to an end Fe of the tread surface 16, and is thus divided into five parts.

Among the five parts, a part located at the center in the axial direction is a center part CLf. The center part CLf includes the equator Ef. Parts located axially outward of the center part CLf are middle parts MLf. Each middle part MLf is connected to the center part CLf. Parts located axially outward of the middle parts MLf are shoulder parts SLf. Each shoulder part SLf is connected to the middle part MLf.

The five parts are the center part CLf including the equator Ef, a pair of the middle parts MLf connected to the center part CLf, and a pair of the shoulder parts SLf connected to the middle parts MLf.

In FIG. 3, each position indicated by reference sign CMf corresponds to the boundary between the center part CLf and the middle part MLf. The boundary CMf is an end of the center part CLf and is the inner end of the middle part MLf. Each position indicated by reference sign MSf corresponds to the boundary between the middle part MLf and the shoulder part SLf. The boundary MSf is the outer end of the middle part MLf and is the inner end of the shoulder part SLf. The outer end of the shoulder part SLf is the end Fe of the tread surface 16. The shoulder part SLf of the tire 2 includes the end Fe of the tread surface 16.

In the tire 2, the length of a portion of the tread contour line TLf from a first boundary CMf to a second boundary CMf, that is, the length of the center part CLf, is one fourth of the length from a first end Fe of the tread surface 16 to a second end Fe of the tread surface 16, that is, the length of the tread contour line TLf.

The length of a portion of the tread contour line TLf from the boundary CMf to the boundary MSf, that is, the length of the middle part MLf, is one fourth of the length of the tread contour line TLf.

The length of a portion of the tread contour line TLf from the boundary MSf to the end Fe of the tread surface 16, that is, the length of the shoulder part SLf, is one eighth of the length of the tread contour line TLf.

In the tire 2, an arc that passes through the equator Ef and both ends CMf of the center part CLf is a first arc. In FIG. 3, an arrow R1f indicates the radius of the first arc. Although not shown, the center of the first arc is located on the equator plane ELf.

An arc that passes through the inner end CMf and the outer end MSf of the middle part MLf and the center of the middle part MLf is a second arc. In FIG. 3, an arrow R2f indicates the radius of the second arc. The center of the middle part MLf is the point of intersection of the middle part MLf and the perpendicular bisector of a line segment connecting the inner end CMf and the outer end MSf.

An arc that passes through the inner end MSf and the outer end Fe of the shoulder part SLf and the center of the shoulder part SLf is a third arc. In FIG. 3, an arrow R3f indicates the radius of the third arc. The center of the shoulder part SLf is the point of intersection of the shoulder part SLf and the perpendicular bisector of a line segment connecting the inner end MSf and the outer end Fe.

In the tire 2, the ratio (R1f/Df) of the radius R1f of the first arc to the outer diameter Df is preferably not less than 8.0% and not greater than 13.0%.

The ratio (R1f/Df) is set to be not less than 8.0%, thus reducing the likelihood that the vehicle understeers at the beginning of cornering. From this viewpoint, the ratio (R1f/Df) is more preferably not less than 9.0% and further preferably not less than 9.7%.

The ratio (R1f/Df) is set to be not greater than 13.0%, thus improving initial responsiveness. From this viewpoint, the ratio (R1f/Df) is more preferably not greater than 12.0%.

In the tire 2, the ratio (R2f/R1f) of the radius R2f of the second arc to the radius R1f of the first arc is preferably not less than 0.99 and not greater than 1.22.

The ratio (R2f/R1f) is set to be not less than 0.99, thus reducing the likelihood that the vehicle understeers at the beginning of cornering.

The ratio (R2f/R1f) is set to be not greater than 1.22, thus allowing the tire 2 to have a sufficiently high cornering force.

In the tire 2, the ratio (R3f/R2f) of the radius R3f of the third arc to the radius R2f of the second arc is preferably not less than 0.79 and not greater than 1.06.

The ratio (R3f/R2f) is set to be not less than 0.79, thus reducing the likelihood that the vehicle understeers at the beginning of cornering. From this viewpoint, the ratio (R3f/R2f) is more preferably not less than 1.01.

The ratio (R3f/R2f) is set to be not greater than 1.06, thus allowing the tire 2 to have a sufficiently high cornering force.

As described above, the tread surface 16 of the tire 2 has no groove. The tread surface 16 has no groove that intersects the equator Ef.

The tire 2 has higher stiffness in a portion at the equator plane ELf that mainly comes into contact with a road surface during straight running, than a tire having a groove that intersects the equator. The tire 2 can quickly shift from straight running to cornering. The tire 2 has high initial responsiveness.

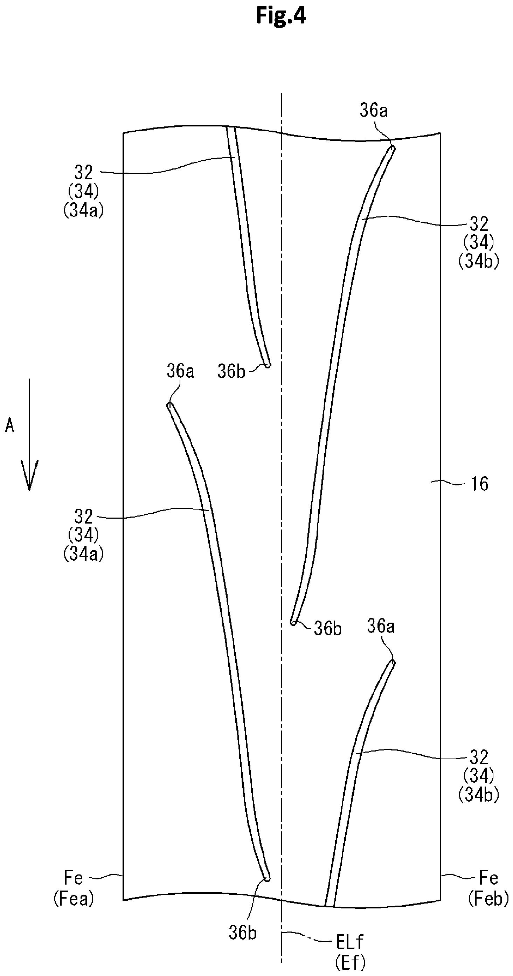

FIG. 4 shows a modification of the tread surface 16. As shown in FIG. 4, the tire 2 may have grooves on the tread surface 16. The tread surface 16 has grooves and thus has, for example, a tread pattern as shown in FIG. 4.

In FIG. 4, the right-left direction is the axial direction of the tire 2, and the up-down direction is the circumferential direction of the tire 2. The direction perpendicular to the surface of the drawing sheet of FIG. 4 is the radial direction of the tire 2.

In FIG. 4, an arrow A indicates the rotation direction of the tire 2. The tread surface 16 comes into contact with a road surface from the lower side to the upper side of the surface of the drawing sheet of FIG. 4. The lower side of the surface of the drawing sheet is a leading side of the tire, and the upper side of the surface of the drawing sheet is a trailing side of the tire.

The tread pattern in FIG. 4 is an example of a tread pattern that can be formed on the tread surface 16 of the tire 2. The tread pattern that can be formed on the tread surface 16 of the tire 2 will be described with reference to FIG. 4.

The tread surface 16 shown in FIG. 4 has inclined grooves 34 formed as grooves 32. Each inclined groove 34 is inclined relative to the circumferential direction. A trailing side end 36a of the inclined groove 34 is located on the end Fe side of the tread surface 16. A leading side end 36b of the inclined groove 34 is located on the equator Ef side.

The inclined grooves 34 include first inclined grooves 34a formed between the equator Ef and a first end Fea of the tread surface 16, and second inclined grooves 34b formed between the equator Ef and a second end Feb of the tread surface 16. The tread surface 16 has a plurality of the first inclined grooves 34a arranged in the circumferential direction at a constant pitch. The tread surface 16 has a plurality of the second inclined grooves 34b arranged in the circumferential direction at a constant pitch. The first inclined grooves 34a and the second inclined grooves 34b are alternate with each other in the circumferential direction.

As shown in FIG. 4, the entirety of each first inclined groove 34a is located between the equator Ef and the end Fea of the tread surface 16. The entirety of each second inclined groove 34b is also located between the equator Ef and the end Feb of the tread surface 16.

This tread surface 16 likewise has no groove that intersects the equator Ef. Thus, in this case as well, the tire 2 has higher stiffness in a portion at the equator plane ELf that mainly comes into contact with a road surface during straight running, than a tire having a groove that intersects the equator. The tire 2 can quickly shift from straight running to cornering. The tire 2 has high initial responsiveness.

From the viewpoint of achieving high initial responsiveness, it is preferred that the tire 2 has no groove that intersects the equator Ef, on the tread surface 16.

### [Rear Tire]

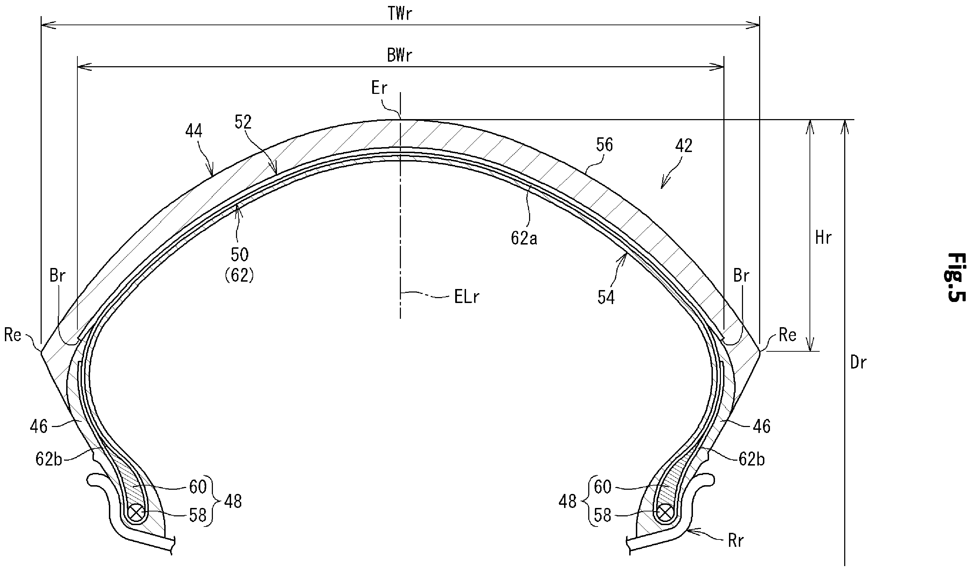

FIG. 5 shows a part of a cross-section (hereinafter, also referred to as meridian cross-section) of a rear tire 42 (hereinafter, tire 42) along a plane including the rotation axis of the tire 42. In FIG. 5, the right-left direction is the axial direction of the tire 42, and the up-down direction is the radial direction of the tire 42. The direction perpendicular to the surface of the drawing sheet of FIG. 5 is the circumferential direction of the tire 42. In FIG. 5, an alternate long and short dash line ELr represents the equator plane of the tire 42.

In FIG. 5, the tire 42 is fitted on a rim Rr (normal rim). The interior of the tire 42 is filled with air to adjust the internal pressure of the tire 42.

The tire 42 includes a tread 44, a pair of sidewalls 46, a pair of beads 48, a carcass 50, a band 52, and an inner liner 54.

The tread 44 is formed from a crosslinked rubber. The tread 44 is located radially outward of the band 52. The tread 44 has a tread surface 56 that comes into contact with a road surface. The tire 42 comes into contact with a road surface at the tread surface 56. As shown in FIG. 5, in the meridian cross-section, the tread surface 56 is curved such that a portion thereof at the equator plane ELr projects radially outward.

The tread 44 of the tire 42 has no groove. The tire 42 is a slick tire.

In FIG. 5, a position indicated by reference sign Er is the point of intersection of the tread surface 56 and the equator plane ELr. The point of intersection Er corresponds to the equator of the tire 42. If a groove is located on the equator plane ELr, the equator Er is specified based on a tread contour line TLr described later. The equator Er is also the radially outer end of the tire 42.

In FIG. 5, each position indicated by reference sign Re is an end of the tread surface 56. A length indicated by a double-headed arrow TWr is the width of the tread surface 56. The width TWr of the tread surface 56 is represented as the distance in the axial direction from a first end Re of the tread surface 56 to a second end Re of the tread surface 56. Each end Re of the tread surface 56 of the tire 42 is an axially outer end of the tire 42. The width TWr of the tread surface 56 of the tire 42 is also referred to as total width (see, for example, JATMA).

Each sidewall 46 is formed from a crosslinked rubber. The sidewall 46 is connected to an end of the tread 44. The sidewall 46 is located radially inward of the tread 44.

Each bead 48 is located radially inward of the sidewall 46. The bead 48 includes a core 58 and an apex 60. The core 58 includes a steel wire, which is not shown. The apex 60 is located radially outward of the core 58. The apex 60 is tapered outward. The apex 60 is formed from a crosslinked rubber having high stiffness.

The carcass 50 is located inward of the tread 44 and the pair of sidewalls 46. The carcass 50 extends on and between a first bead 48 and a second bead 48 that are the pair of beads 48.

The carcass 50 includes at least one carcass ply 62. The carcass 50 of the tire 42 is composed of one carcass ply 62.

The carcass ply 62 includes a ply body 62a that extends on and between a first core 58 and a second core 58, and a pair of turned-up portions 62b that are connected to the ply body 62a and turned up around the respective cores 58 from the inner side toward the outer side in the axial direction.

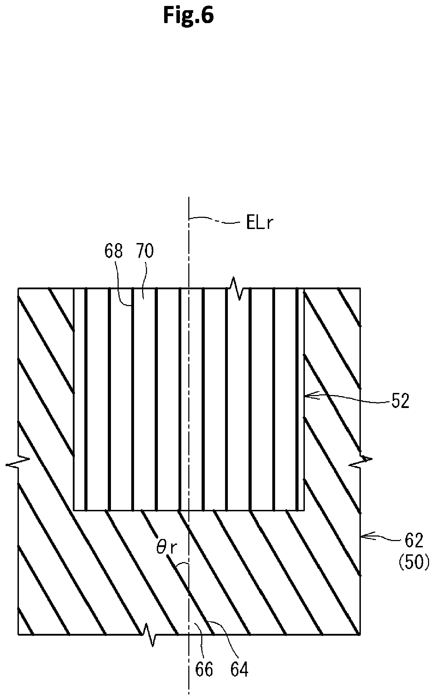

FIG. 6 shows the configuration of the carcass 50 together with the band 52 described later. In FIG. 6, the right-left direction is the axial direction of the tire 42, and the up-down direction is the circumferential direction of the tire 42. The direction perpendicular to the surface of the drawing sheet of FIG. 6 is the radial direction of the tire 42. The front side of the drawing sheet is the outer side in the radial direction, and the back side of the drawing sheet is the inner side in the radial direction.

As shown in FIG. 6, the carcass ply 62 included in the carcass 50 includes a large number of carcass cords 64 aligned with each other. In FIG. 6 as well, each carcass cord 64 is represented by a solid line for convenience of description, but the carcass cords 64 are covered with a topping rubber 66.

Each carcass cord 64 is inclined relative to the equator plane ELr. In FIG. 6, an angle indicated by reference sign θr is the angle (inclination angle θr) of each carcass cord 64 in the carcass ply 62 with respect to the equator plane ELr. In the tire 42, the inclination angle θr of each carcass cord 64 is not less than 20 degrees and not greater than 65 degrees.

In the tire 42, each carcass cord 64 may be a cord formed from an organic fiber (organic fiber cord). Examples of the organic fiber include nylon fibers, rayon fibers, polyester fibers, and aramid fibers. In the tire 42, each carcass cord 64 may be a cord formed from an inorganic fiber. In this case, examples of the inorganic fiber include glass fibers and carbon fibers.

In the tire 42, from the viewpoint of well-balancing strength and steering stability, each carcass cord 64 is preferably an organic fiber cord.

The band 52 is located radially outward of the carcass 50. The band 52 is stacked on the carcass 50 and is located radially inward of the tread 44. The band 52 is located between the tread 44 and the carcass 50.

The band 52 includes a helically wound band cord 68. In FIG. 6, the band cord 68 is represented by a solid line for convenience of description, but is covered with a topping rubber 70. In the tire 42, the band cord 68 extends substantially in the circumferential direction. Specifically, the angle of the band cord 68 with respect to the circumferential direction is not greater than 5°. The band 52 is also referred to as jointless band.

In the tire 42, the band cord 68 may be a cord formed from an organic fiber (organic fiber cord). Examples of the organic fiber include nylon fibers, rayon fibers, polyester fibers, and aramid fibers. In the tire 42, the band cord 68 may be a cord formed from an inorganic fiber. In this case, examples of the inorganic fiber include glass fibers and carbon fibers. The band cord 68 may be a steel cord.

In FIG. 5, each position indicated by reference sign Br is an end of the band 52. A length indicated by a double-headed arrow BWr is the width of the band 52. The width BWr of the band 52 is represented as the distance in the axial direction from a first end Br of the band 52 to a second end Br of the band 52. In the tire 42, the ratio (BWr/TWr) of the width BWr of the band 52 to the width TWr of the tread surface 56 is not less than 0.80 and not greater than 0.95.

The inner liner 54 is located inward of the carcass 50. The inner liner 54 forms an inner surface of the tire 42. The inner liner 54 is formed from a crosslinked rubber having a low gas permeability coefficient. The inner liner 54 maintains the internal pressure of the tire 42.

In FIG. 5, a length indicated by a double-headed arrow Hr is a tread height. The tread height Hr is the distance in the radial direction from the equator Er to the end Re of the tread surface 56.

A length indicated by reference sign Dr is the outer diameter of the tire 42. The outer diameter Dr is measured in the tire 42 in the normal state.

In the tire 42, the ratio (Hr/Dr) of the tread height Hr to the outer diameter Dr is preferably not less than 8.5% and not greater than 15.0%.

The ratio (Hr/Dr) is set to be not less than 8.5%, thus allowing the tire 42 to have a sufficiently high cornering force. From this viewpoint, this ratio (Hr/Dr) is more preferably not less than 9.1%.

The ratio (Hr/Dr) is set to be not greater than 15.0%, thus allowing each side portion of the tire 42 to have sufficiently high stiffness. From this viewpoint, this ratio (Hr/Dr) is more preferably not greater than 9.5%.

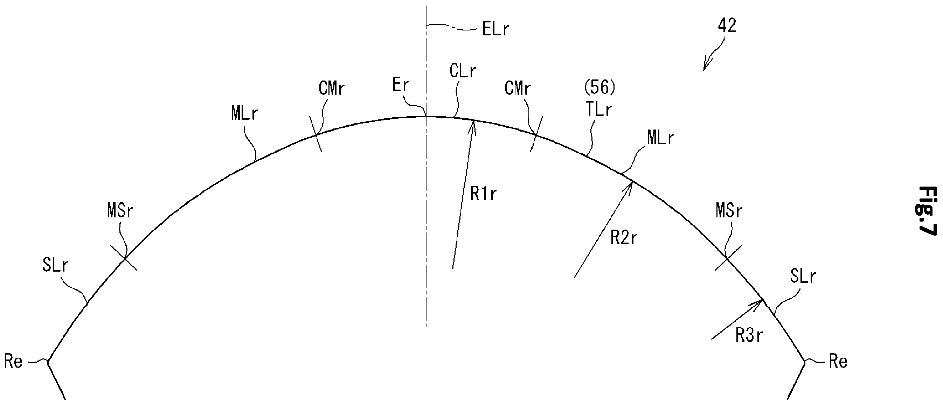

FIG. 7 shows a contour line of the rear tire 42 in the meridian cross-section. Of the contour line shown in FIG. 7, a portion from the first end Re of the tread surface 56 to the second end Re of the tread surface 56 is a contour line TLr of the tread surface 56 (hereinafter, tread contour line TLr).

In FIG. 7, the tread contour line TLr has a shape that is symmetrical about the equator plane ELr. In the tire 42, the tread contour line TLf has a portion divided in a length ratio of 1:2:1 from the equator Er to an end Re of the tread surface 56, and is thus divided into five parts

Among the five parts, a part located at the center in the axial direction is a center part CLr. The center part CLr includes the equator Er. Parts located axially outward of the center part CLr are middle parts MLr. Each middle part MLr is connected to the center part CLr. Parts located axially outward of the middle parts MLr are shoulder parts SLr. Each shoulder part SLr is connected to the middle part MLr.

The five parts are the center part CLr including the equator Er, a pair of the middle parts MLr connected to the center part CLr, and a pair of the shoulder parts SLr connected to the middle parts MLr.

In FIG. 7, each position indicated by reference sign CMr corresponds to the boundary between the center part CLr and the middle part MLr. The boundary CMr is an end of the center part CLr and is the inner end of the middle part MLr. Each position indicated by reference sign MSr corresponds to the boundary between the middle part MLr and the shoulder part SLr. The boundary MSr is the outer end of the middle part MLr and is the inner end of the shoulder part SLr. The outer end of the shoulder part SLr is the end Re of the tread surface 56. The shoulder part SLr of the tire 42 includes the end Re of the tread surface 56.

In the tire 42, the length of a portion of the tread contour line TLr from the first boundary CMr to the second boundary CMr, that is, the length of the center part CLr, is one fourth of the length from a first end Re of the tread surface 56 to a second end Re of the tread surface 56, that is, the length of the tread contour line TLr.

The length of a portion of the tread contour line TLr from the boundary CMf to the boundary MSf, that is, the length of the middle part MLr, is one fourth of the length of the tread contour line TLr.

The length of a portion of the tread contour line TLr from the boundary MSr to the end Re of the tread surface 56, that is, the length of the shoulder part SLr, is one eighth of the tread contour line CLr.

In the tire 42, an arc that passes through the equator Er and both ends CMr of the center part CLr is a first arc. In FIG. 7, an arrow R1r indicates the radius of the first arc. Although not shown, the center of the first arc is located on the equator plane Elf.

An arc that passes through the inner end CMr and the outer end MSr of the middle part MLr and the center of the middle part MLr is a second arc. In FIG. 7, an arrow R2f indicates the radius of the second arc. The center of the middle part MLr is the point of intersection of the middle part MLr and the perpendicular bisector of a line segment connecting the inner end CMr and the outer end MSr.

An arc that passes through the inner end MSr and the outer end Re of the shoulder part SLr and the center of the shoulder part SLr is a third arc. In FIG. 7, an arrow R3r indicates the radius of the third arc. The center of the shoulder part SLr is the point of intersection of the shoulder part SLr and the perpendicular bisector of a line segment connecting the inner end MSr and the outer end Re.

In the tire 42, the ratio (R1r/Dr) of the radius R1r of the first arc to the outer diameter Dr is preferably not less than 9.0% and not greater than 21.0%.

The ratio (R1r/Dr) is set to be not less than 9.0%, thus reducing the likelihood that the vehicle understeers at the beginning of cornering. From this viewpoint, this ratio is more preferably not less than 9.1%.

The ratio (R1r/Dr) is set to be not greater than 21.0%, thus improving initial responsiveness. From this viewpoint, this ratio is more preferably not greater than 20.7%.

In the tire 42, the ratio (R2r/R1r) of the radius R2r of the second arc to the radius R1r of the first arc is preferably not less than 0.84 and not greater than 1.19.

The ratio (R2r/R1r) is set to be not less than 0.84, thus effectively reducing the likelihood that the vehicle understeers at the beginning of cornering. From this viewpoint, the ratio (R2r/R1r) is more preferably not less than 0.94 and further preferably not less than 0.99.

The ratio (R2r/R1r) is set to be not greater than 1.19, thus allowing the tire 42 to have a sufficiently high cornering force.

In the tire 42, the ratio (R3r/R2r) of the radius R3r of the third arc to the radius R2r of the second arc is preferably not less than 0.81 and not greater than 1.44.

The ratio (R3r/R2r) is set to be not less than 0.81, thus effectively reducing the likelihood that the vehicle understeers at the beginning of cornering. From this viewpoint, the ratio (R3r/R2r) is more preferably not less than 0.93 and further preferably not less than 1.15.

The ratio (R3r/R2r) is set to be not greater than 1.44, thus allowing the tire 42 to have a sufficiently high cornering force.

As described above, the tread surface 56 of the tire 42 has no groove. The tread surface 56 has no groove that intersects the equator Er.

The tire 42 has higher stiffness in a portion at the equator plane ELr that mainly comes into contact with a road surface during straight running, than a tire having a groove that intersects the equator. The tire 42 can quickly shift from straight running to cornering. The tire 42 has high initial responsiveness.

In the tire 42 as well, the tread surface 56 may have grooves, as with the tread surface 16 of the above-described front tire 2. In this case, as with the tread surface 16, the tread surface 56 has a tread pattern (not shown) such that no groove intersecting the equator Er is included. The tire 42 has higher stiffness in a portion at the equator plane ELr that mainly comes into contact with a road surface during straight running, than a tire having a groove that intersects the equator. The tire 42 can quickly shift from straight running to cornering. The tire 42 has high initial responsiveness.

In the tire 42, from the viewpoint of achieving high initial responsiveness, the tread surface 56 preferably has no groove that intersects the equator Er.

### [Tire Pair]

A tire pair according to an embodiment of the present invention includes the above-described front tire 2 and the above-described rear tire 42. In the tire pair, to effectively contribute to improvement of the cornering performance of a vehicle, the tread contour line TLf of the front tire 2 and the tread contour line TLr of the rear tire 42 are mainly set to be in a fine balance.

In the tire pair, a center arc index Ac, a middle arc index Am, and a shoulder arc index As, which are described below, are used to appropriately set the tread contour line TLf and the tread contour line TLr.

The center arc index Ac is the ratio (R1f/R1r) of the radius R1f of the first arc of the front tire 2 to the radius R1r of the first arc of the rear tire 42.

The middle arc index Am is the ratio (R2f/R2r) of the radius R2f of the second arc of the front tire 2 to the radius R2r of the second arc of the rear tire 42.

The shoulder arc index As is the ratio (R3f/R3r) of the radius R3f of the third arc of the front tire 2 to the radius R3r of the third arc of the rear tire 42.

In a corner where the vehicle corners at high speed (hereinafter, high speed corner), portions of the tread surface of the tire that correspond to the center part and the middle parts of the tread contour line are used. More specifically, in the tread surface 16 of the front tire 2, portions corresponding to the center part CLf and the middle parts MLf of the tread contour line TLf are used, and in the tread surface 56 of the rear tire 42, portions corresponding to center part CLr and the middle parts MLr of the tread contour line TLr are used.

In the tire pair, the middle arc index Am is greater than or equal to the center arc index Ac. At the beginning of cornering, the rear tire 42 of the tire pair has camber thrust smaller than camber thrust generated in the front tire 2. The tire pair can easily change the direction of the vehicle body. The cornering performance of the front tire 2 is improved compared to that of the rear tire 42, thus allowing the front tire 2 to contribute to cornering of the vehicle earlier than the rear tire 42. The tire pair can maintain high cornering performance without oversteer. The cornering force generated when the vehicle is leaned is made greater than or equal to the cornering force at the beginning of cornering. This allows stable running of the vehicle in the high speed corner. The tire pair has high cornering stability. The tire pair has high cornering performance in the high speed corner. From this viewpoint, the middle arc index Am is preferably greater than the center arc index Ac.

In a corner where the vehicle corners at medium-low speed (hereinafter, medium-low speed corner), a portion from the equator of the tread surface to the end of the tread surface, that is, a portion from a portion corresponding to the center part of the tread contour line to a portion corresponding to the shoulder part of the tread contour line is used. More specifically, in the tread surface 16 of the front tire 2, a portion from a portion corresponding to the center part CLf of the tread contour line TLf to a portion corresponding to the shoulder part SLf of the tread contour line TLf is used, and in the tread surface 56 of the rear tire 42, a portion from a portion corresponding to the center part CLr of the tread contour line TLr to a portion corresponding to the shoulder part SLr of the tread contour line TLr is used.

When the vehicle runs in the medium-low speed corner, portions of the tread surface of the tire that correspond to the center part and the middle parts of the tread contour line are first used as in the above-described case where the vehicle runs in the high speed corner.

As described above, the middle arc index Am is greater than or equal to the center arc index Ac. The tire pair allows the vehicle to change its direction easily and to run in the medium-low speed corner stably.

The radius of curvature of the medium-low speed corner is smaller than that of the high speed corner. When running in the medium-low speed corner, the vehicle may run with its body fully leaned (i.e., maximum lean angle). In this case, a portion of the tread surface of the tire that corresponds to the shoulder part of the tread contour line is used.

In the tire pair, the shoulder arc index As is smaller than the center arc index Ac. The tire pair allows the vehicle to have an intended cornering force during running in the medium-low speed corner. Although the vehicle may understeer when further leaned, this tire pair effectively reduces the likelihood that the vehicle understeers. The tire pair also has high cornering performance in the medium-low speed corner.

In the tire pair, the middle arc index Am is greater than or equal to the center arc index Ac, and the shoulder arc index As is smaller than the center arc index Ac.

The tire pair achieves improvement of cornering performance in the medium-low speed corner while maintaining high cornering performance in the high speed corner. This tire pair can improve the cornering performance of a vehicle.

In the tire pair, from the viewpoint of achieving further improvement of the cornering performance of a vehicle, the middle arc index Am is preferably greater than the center arc index Ac, and that the shoulder arc index As is preferably smaller than the center arc index Ac.

In the tire pair, the middle arc index Am is preferably not less than 0.50. This configuration reduces the likelihood that the overall roundness of the tread surface 56 in the rear tire 42 becomes too small relative to the overall roundness of the tread surface 16 in the front tire 2. The cornering force of the front tire 2 is appropriately maintained during running in the high speed corner where portions of the tread surface of the tire that correspond to the center part and the middle parts of the tread contour line are used. The tire pair can effectively reduce the likelihood that the vehicle understeers. From this viewpoint, the middle arc index Am is preferably not less than 0.54. From the viewpoint of maintaining high cornering performance, the middle arc index Am is preferably not greater than 1.10 and more preferably not greater than 1.03.

In the tire pair, the shoulder arc index As is preferably not less than 0.35. This configuration reduces the likelihood that the overall roundness of the tread surface 56 in the rear tire 42 becomes too large relative to the overall roundness of the tread surface 16 in the front tire 2. This configuration also reduces the likelihood that the contribution of the front tire 2 is too much greater than that of the rear tire 42 during running at the maximum lean angle in the medium-low speed corner where a portion of the tread surface of the tire that corresponds to the shoulder part of the tread contour line is used. The tire pair can effectively reduce the likelihood that the vehicle oversteers during running at the maximum lean angle. From this viewpoint, the shoulder arc index As is preferably not less than 0.37. From the viewpoint of maintaining high cornering performance, the shoulder arc index As is preferably not greater than 0.88 and more preferably not greater than 0.68.

In the tire pair, from the viewpoint of maintaining high cornering performance, the middle arc index Am is preferably not less than 0.50, and the shoulder arc index As is preferably not less than 0.35.

In the tire pair, it is further preferred that the middle arc index Am is greater than or equal to the center arc index Ac, the shoulder arc index As is smaller than the center arc index Ac, the middle arc index Am is not less than 0.50, and the shoulder arc index As is not less than 0.35.

As described above, in the front tire 2, the ratio (Hf/Df) of the tread height Hf to the outer diameter Df is preferably not less than 5.0% and not greater than 10.0%. In the rear tire 42, the ratio (Hr/Dr) of the tread height Hr to the outer diameter Dr is preferably not less than 8.5% and not greater than 15.0%.

In the tire pair, from the viewpoint of improving the cornering performance of a vehicle, in the front tire 2, the ratio (Hf/Df) of the tread height Hf to the outer diameter Df is more preferably not less than 5.0% and not greater than 10.0%, and in the rear tire 42, the ratio (Hr/Dr) of the tread height Hr to the outer diameter Dr is more preferably not less than 8.5% and not greater than 15.0%.

As described above, in the front tire 2, the ratio (R1f/Df) of radius R1f of the first arc to the outer diameter Df is preferably not less than 8.0% and not greater than 13.0%. In the rear tire 42, the ratio (R1r/Dr) of the radius R1r of the first arc to the outer diameter Dr is preferably not less than 9.0% and not greater than 21.0%.

In the tire pair, from the viewpoint of improving the cornering performance of a vehicle, in the front tire 2, the ratio (R1f/Df) of the radius R1f of the first arc to the outer diameter Df is more preferably not less than 8.0% and not greater than 13.0%, and in the rear tire 42, the ratio (R1r/Dr) of the radius R1r of the first arc to the outer diameter Dr is more preferably not less than 9.0% and not greater than 21.0%.

As described above, the present invention provides a motorcycle tire pair that can improve the cornering performance of a vehicle.

### EXAMPLES

The following will further describe the present invention by way of, for example, Examples, but the scope of the present invention is limited as claimed.

### [Example 1]

A motorcycle tire pair including a front tire (120/70ZR17) having the basic structure shown in FIG. 1 and having specifications shown in Table 1 below and a rear tire (190/55ZR17) having the basic structure shown in FIG. 5 and having specifications shown in Table 1, was prepared.

The front tire and the rear tire of Example 1 are slick tires. Each of the tread surfaces of the front tire and the rear tire has no groove that intersects the equator. This is indicated as "N" in the cell for "Groove" in Table 1.

### [Examples 2 to 4 and Comparative Examples 1 to 2]

Tire pairs of Examples 2 to 4 and Comparative Examples 1 to 2 having specifications shown in Table 1 below were prepared. The basic structure of each of the tire pairs is identical to that of the tire pair of Example 1.

Each of the tread surfaces of Examples 2 and 3 and Comparative Examples 1 were provided with grooves that intersect the equator. This is indicated as "Y" in the cells for "Groove" in Table 1.

In each tire pair, the size of the front tire was 120/70ZR17, and the size of the rear tire was 190/55ZR17.

### [Performance Evaluation]

A front tire and a rear tire were each fitted onto a normal rim and inflated with air to adjust the tire internal pressure to a normal internal pressure.

The front tire and the rear tire were mounted to a large motorcycle (engine displacement = 1000 cc). The motorcycle was caused to run on a test course having a dry asphalt road surface, and sensory evaluations (10-point method) were made by a test rider.

The evaluation items are high speed cornering performance, medium-low speed cornering performance, and initial responsiveness.

The evaluation results are shown as indexes in Table 1 below. A higher value indicates a better result.

**[Table 1]**

| | Comparative Example 1 | Comparative Example 2 | Example 1 | Example 2 | Example 3 | Example 4 |
|---|---|---|---|---|---|---|
| R1f [mm] | 60.6 | 59.0 | 59.0 | 73.0 | 59.0 | 60.6 |
| R2f [mm] | 60.6 | 61.4 | 65.0 | 72.0 | 72.0 | 68.3 |
| R3f [mm] | 60.6 | 64.0 | 69.0 | 57.0 | 69.0 | 60.6 |
| R2f/R1f [-] | 1.00 | 1.04 | 1.10 | 0.99 | 1.22 | 1.13 |
| R3f/R2f [-] | 1.00 | 1.04 | 1.06 | 0.79 | 0.96 | 0.89 |
| R1r [mm] | 102.7 | 107.8 | 100.4 | 135.0 | 59.0 | 102.3 |
| R2r [mm] | 102.7 | 90.4 | 94.0 | 133.0 | 70.0 | 112.7 |
| R3r [mm] | 102.7 | 73.0 | 120.0 | 153.0 | 101.0 | 105.0 |
| R2r/R1r [-] | 1.00 | 0.84 | 0.94 | 0.99 | 1.19 | 1.10 |
| R3r/R2r [-] | 1.00 | 0.81 | 1.28 | 1.15 | 1.44 | 0.93 |
| Ac [-] | 0.59 | 0.55 | 0.59 | 0.54 | 1.00 | 0.59 |
| Am [-] | 0.59 | 0.68 | 0.69 | 0.54 | 1.03 | 0.61 |
| As [-] | 0.59 | 0.88 | 0.58 | 0.37 | 0.68 | 0.58 |
| R1f/Df [-] | 10.2 | 9.7 | 9.7 | 12.0 | 9.7 | 10.1 |
| R1r/Dr [-] | 16.0 | 16.6 | 15.6 | 20.7 | 9.1 | 15.6 |
| Hf/Df [-] | 8.6 | 6.9 | 8.4 | 8.2 | 8.5 | 8.5 |
| Hr/Dr [-] | 9.5 | 9.2 | 9.5 | 9.1 | 9.1 | 9.5 |
| Groove | Y | N | N | Y | Y | N |
| High speed cornering performance | 2.3 | 3.6 | 7.5 | 9.0 | 8.7 | 7.1 |
| Medium-low speed cornering performance | 6.7 | 3.7 | 7.9 | 8.7 | 8.2 | 7.9 |
| Initial responsiveness | 5.7 | 4.9 | 7.0 | 7.1 | 6.8 | 6.5 |

As shown in Table 1, it is confirmed that the tire pair of each Example can contribute to improvement of the cornering performance of a vehicle. From the evaluation results, advantages of the present invention are clear.

### INDUSTRIAL APPLICABILITY

The above-described technology that is able to contribute to improvement of the cornering performance of a vehicle can also be applied to tire pairs for various motorcycles.

### REFERENCE SIGNS LIST

2 front tire
4, 44 tread
8, 48 bead
10, 50 carcass
12, 52 band
22, 62 carcass ply
24, 64 carcass cord
28, 68 band cord
42 rear tire

## Claims

1. A motorcycle tire (2) pair comprising a front tire and a rear tire, wherein
each of the front tire (2) and the rear tire (2) includes a pair of beads (8), a carcass (10) extending on and between a first bead (8) and a second bead (8) being the pair of beads (8), a band (12) located radially outward of the carcass (10), and a tread (4) located radially outward of the band (12),
the carcass (10) includes a large number of carcass cords (24) aligned with each other, each of the carcass cords (24) being inclined relative to an equator plane (ELf),
the band (12) includes a band cord (28) extending substantially in a circumferential direction,
the tread (4) has a tread surface (16) that comes into contact with a road surface, in a meridian cross-section, a contour line (TLf) of the tread surface (16) has a portion divided in a length ratio of 1:2:1 from an equator (Ef) to an end (Fe) of the tread surface (16), and is thus divided into five parts,
wherein the tire equator (Ef) is defined as the point of intersection of the tread surface (16) and the equator plane (ELf,) and the end (Fe) of the tread surface (16) is defined as an axially outer end of the tire (2),
the five parts are a center part (CLf) including the equator (Ef), a pair of middle parts (MLf) connected to the center part (CLf), and a pair of shoulder parts (SLf) connected to the middle parts (MLf),
an arc that passes through the equator (Ef) and both ends of the center part (CLf) is a first arc,
an arc that passes through inner and outer ends of the middle part (MLf) and a center of the middle part (MLf) is a second arc,
an arc that passes through inner and outer ends of the shoulder part (SLf) and a center of the shoulder part (SLf) is a third arc,
a ratio (R1f/R1r) of a radius R1f of the first arc of the front tire (2) to a radius R1r of the first arc of the rear tire (2) is a center arc index (Ac),
a ratio (R2f/R2r) of a radius R2f of the second arc of the front tire (2) to a radius R2r of the second arc of the rear tire (2) is a middle arc index (Am),
a ratio (R3f/R3r) of a radius R3f of the third arc of the front tire (2) to a radius R3r of the third arc of the rear tire (2) is a shoulder arc index (As),
**characterized in that**
the middle arc index (Am) is greater than or equal to the center arc index (Ac), and
the shoulder arc index (As) is smaller than the center arc index (Ac).

2. The motorcycle tire pair (2) according to claim 1, wherein
the middle arc index (Am) is not less than 0.50, and
the shoulder arc index (As) is not less than 0.35.

3. The motorcycle tire (2) pair according to claim 1 or 2, wherein
a distance in a radial direction from the equator (Ef) to the end of the tread surface (16) is a tread height (Hf),
a ratio of the tread height (Hf) to an outer diameter (Df) in the front tire (2) is not less than 5.0% and not greater than 10.0%, and
a ratio of the tread height (Hf) to an outer diameter (Df) in the rear tire (2) is not less than 8.5% and not greater than 15.0%.

4. The motorcycle tire (2) pair according to any one of claims 1 to 3, wherein
a ratio (R1f/Df) of the radius R1f of the first arc to an outer diameter (Df) in the front tire (2) is not less than 8.0% and not greater than 13.0%, and
a ratio (R1f/Df) of the radius R1r of the first arc to an outer diameter (Df) in the rear tire (2) is not less than 9.0% and not greater than 21.0%.

5. The motorcycle tire (2) pair according to any one of claims 1 to 4, wherein the tread surface (16) has no groove that intersects the equator (Ef).

6. The motorcycle tire (2) pair according to any one of claims 1 to 5, wherein an angle (θr) of each carcass cord (64) with respect to the equator plane (ELf) is not less than 20 degrees and not greater than 65 degrees.

7. The motorcycle tire (2) pair according to claim 6, wherein each carcass cord (64) is a cord formed from an organic fiber.

## Patentansprüche

1. Paar Motorradreifen (2) mit einem Vorderreifen und einem Hinterreifen, wobei
jeder von dem Vorderreifen (2) und dem Hinterreifen (2) ein Paar Wülste (8), eine Karkasse (10), die sich auf und zwischen einem ersten Wulst (8) und einem zweiten Wulst (8), die das Paar Wülste (8) bilden, erstreckt, ein Band (12), das sich radial außen von der Karkasse (10) befindet, und eine Lauffläche (4), die sich radial außen von dem Band (12) befindet, umfasst,
die Karkasse (10) eine große Anzahl von Karkasskorden (24) umfasst, die miteinander ausgerichtet sind, wobei jeder der Karkasskorde (24) relativ zu einer Äquatorebene (ELf) geneigt ist,
das Band (12) einen Bandkord (28) umfasst, der sich im Wesentlichen in einer Umfangsrichtung erstreckt,
die Lauffläche (4) eine Laufflächen-Oberfläche (16) aufweist, die mit einer Straßenoberfläche in Kontakt kommt,
in einem Meridianquerschnitt eine Konturlinie (TLf) der Laufflächen-Oberfläche (16) einen Abschnitt aufweist, der in einem Längenverhältnis von 1:2:1 von einem Äquator (Ef) zu einem Ende (Fe) der Laufflächen-Oberfläche (16) unterteilt ist, und somit in fünf Teile unterteilt ist,
wobei der Reifenäquator (Ef) als der Schnittpunkt der Laufflächen-Oberfläche (16) und der Äquatorebene (ELf) definiert ist und das Ende (Fe) der Laufflächen-Oberfläche (16) als ein axial äußeres Ende des Reifens (2) definiert ist,
die fünf Teile einen Zentrallteil (CLf), der den Äquator (Ef) umfasst, ein Paar Mittelteile (MLf), die mit dem Zentrallteil (CLf) verbunden sind, und ein Paar Schulterteile (SLf), die mit den Mittelteilen (MLf) verbunden sind, sind,
ein Bogen, der durch den Äquator (Ef) und beide Enden des Zentralteils (CLf) verläuft, ein erster Bogen ist,
ein Bogen, der durch innere und äußere Enden des Mittelteils (MLf) und ein Zentrum des Mittelteils (MLf) verläuft, ein zweiter Bogen ist,
ein Bogen, der durch innere und äußere Enden des Schulterteils (SLf) und ein Zentrum des Schulterteils (SLf) verläuft, ein dritter Bogen ist,
ein Verhältnis (R1f/R1r) eines Radius R1f des ersten Bogens des Vorderreifens (2) zu einem Radius R1r des ersten Bogens des Hinterreifens (2) ein Zentralbogenindex (Ac) ist,
ein Verhältnis (R2f/R2r) eines Radius R2f des zweiten Bogens des Vorderreifens (2) zu einem Radius R2r des zweiten Bogens des Hinterreifens (2) ein Mittelbogenindex (Am) ist,
ein Verhältnis (R3f/R3r) eines Radius R3f des dritten Bogens des Vorderreifens (2) zu einem Radius R3r des dritten Bogens des Hinterreifens (2) ein Schulterbogenindex (As) ist,
**dadurch gekennzeichnet, dass**
der Mittelbogenindex (Am) größer als oder gleich dem Zentralbogenindex (Ac) ist, und
der Schulterbogenindex (As) kleiner als der Zentralbogenindex (Ac) ist.

2. Paar Motorradreifen (2) nach Anspruch 1, wobei
der Mittelbogenindex (Am) nicht kleiner als 0,50 ist, und
der Schulterbogenindex (As) nicht kleiner als 0,35 ist.

3. Paar Motorradreifen (2) nach Anspruch 1 oder 2, wobei
ein Abstand in einer radialen Richtung von dem Äquator (Ef) zu dem Ende der Laufflächen-Oberfläche (16) eine Laufflächenhöhe (Hf) ist,
ein Verhältnis der Laufflächenhöhe (Hf) zu einem Außendurchmesser (Df) in dem Vorderreifen (2) nicht kleiner als 5,0% und nicht größer als 10,0% ist, und
ein Verhältnis der Laufflächenhöhe (Hf) zu einem Außendurchmesser (Df) in dem Hinterreifen (2) nicht kleiner als 8,5% und nicht größer als 15,0% ist.

4. Paar Motorradreifen (2) nach einem der Ansprüche 1 bis 3, wobei
ein Verhältnis (R1f/Df) des Radius R1f des ersten Bogens zu einem Außendurchmesser (Df) in dem Vorderreifen (2) nicht kleiner als 8,0% und nicht größer als 13,0% ist, und
ein Verhältnis (R1f/Df) des Radius R1r des ersten Bogens zu einem Außendurchmesser (Df) in dem Hinterreifen (2) nicht kleiner als 9,0% und nicht größer als 21,0% ist.

5. Paar Motorradreifen (2) nach einem der Ansprüche 1 bis 4, wobei die Laufflächen-Oberfläche (16) keine Rille aufweist, die den Äquator (Ef) schneidet.

6. Paar Motorradreifen (2) nach einem der Ansprüche 1 bis 5, wobei ein Winkel (θr) jedes Karkasskords (64) in Bezug auf die Äquatorebene (ELf) nicht kleiner als 20 Grad und nicht größer als 65 Grad ist.

7. Paar Motorradreifen (2) nach Anspruch 6, wobei jeder Karkasskord (64) ein Kord ist, der aus einer organischen Faser gebildet ist.

## Revendications

1. Paire de pneumatiques pour motocyclette (2) comprenant un pneumatique avant et un pneumatique arrière, dans laquelle
chacun du pneumatique avant (2) et du pneumatique arrière (2) inclut une paire de talons (8), une carcasse (10) s'étendant sur et entre un premier talon (8) et un second talon (8) qui sont la paire de talons (8), une bande (12) située radialement à l'extérieur de la carcasse (10), et une bande de roulement (4) située radialement à l'extérieur de la bande (12),
la carcasse (10) inclut un grand nombre de câblés de carcasse (24) alignés les uns avec les autres, chacun des câblés de carcasse (24) étant incliné relativement à un plan d'équateur (ELf),
la bande (12) inclut un câblé de bande (28) s'étendant sensiblement dans une direction circonférentielle,
la bande de roulement (4) a une surface de bande de roulement (16) qui vient en contact avec une surface routière,
dans une section transversale méridienne, une ligne de contour (TLf) de la surface de bande de roulement (16) a une portion divisée dans un rapport de longueur de 1:2:1 depuis un équateur (Ef) jusqu'à une extrémité (Fe) de la surface de bande de roulement (16), et est ainsi divisée en cinq parties,
dans lequel l'équateur de pneumatique (Ef) est défini comme étant le point d'intersection de la surface de bande de roulement (16) et du plan d'équateur (ELf), et l'extrémité (Fe) de la surface de bande de roulement (16) est définie comme étant une extrémité axialement extérieure du pneumatique (2),
les cinq parties sont une partie centrale (CLf) incluant l'équateur (Ef), une paire de parties médianes (MLf) connectées à la partie centrale (CLf), et une paire de parties d'épaulement (SLf) connectées aux parties médianes (MLf),
un arc qui passe à travers l'équateur (Ef) et les deux extrémités de la partie centrale (CLf) est un premier arc,
un arc qui passe à travers des extrémités intérieure et extérieure de la partie médiane (MLf) et un centre de la partie médiane (MLf) est un deuxième arc,
un arc qui passe à travers des extrémités intérieure et extérieure de la partie d'épaulement (SLf) et un centre de la partie épaulement (SLf) est un troisième arc,
un rapport (R1f/R1r) d'un rayon R1f du premier arc du pneumatique avant (2) sur un rayon R1r du premier arc du pneumatique arrière (2) est un indice d'arc central (Ac),
un rapport (R2f/R2r) d'un rayon R2f du deuxième arc du pneumatique avant (2) sur un rayon R2r du deuxième arc du pneumatique arrière (2) est un indice d'arc médian (Am),
un rapport (R3f/R3r) d'un rayon R3f du troisième arc du pneumatique avant (2) sur un rayon R3r du troisième arc du pneumatique arrière (2) est un indice d'arc d'épaulement (As),
**caractérisé en ce que**
l'indice d'arc médian (Am) est supérieur ou égal à l'indice d'arc central (Ac), et
l'indice d'arc d'épaulement (As) est inférieur à l'indice d'arc central (Ac).

2. Paire de pneumatiques pour motocyclette (2) selon la revendication 1, dans laquelle
l'indice d'arc médian (Am) n'est pas inférieur à 0,50, et
l'indice d'arc d'épaulement (As) n'est pas inférieur à 0,35.

3. Paire de pneumatiques pour motocyclette (2) selon la revendication 1 ou 2, dans laquelle
une distance dans une direction radiale depuis l'équateur (Ef) jusqu'à l'extrémité de la surface de bande de roulement (16) est une hauteur de bande de roulement (Hf),
un rapport de la hauteur de bande de roulement (Hf) sur un diamètre extérieur (Df) dans le pneumatique avant (2) n'est pas inférieur à 5,0 % et n'est pas supérieur à 10,0 %, et
un rapport de la hauteur de bande de roulement (Hf) sur un diamètre extérieur (Df) dans le pneumatique arrière (2) n'est pas inférieur à 8,5 % et n'est pas supérieur à 15,0 %.

4. Paire de pneumatiques pour motocyclette (2) selon l'une quelconque des revendications 1 à 3, dans laquelle
un rapport (R1f/Df) du rayon R1f du premier arc sur un diamètre extérieur (Df) dans le pneumatique avant (2) n'est pas inférieur à 8,0 % et n'est pas supérieur à 13,0 %, et
un rapport (R1f/Df) du rayon R1f du premier arc sur un diamètre extérieur (Df) dans le pneumatique arrière (2) n'est pas inférieur à 9,0 % et n'est pas supérieur à 21,0 %.

5. Paire de pneumatiques pour motocyclette (2) selon l'une quelconque des revendications 1 à 4, dans laquelle la surface de bande de roulement (16) n'a aucune rainure qui recoupe l'équateur (Ef).

6. Paire de pneumatiques pour motocyclette (2) selon l'une quelconque des revendications 1 à 5, dans laquelle un angle (θr) de chaque câblé de carcasse (64) par rapport au plan d'équateur (ELf) n'est pas inférieur à 20 degrés et n'est pas supérieur à 65 degrés.

7. Paire de pneumatiques pour motocyclette (2) selon la revendication 6, dans laquelle chaque câblé de carcasse (64) est un câblé formé à partir d'une fibre organique.
